# EUROPÄISCHE PATENTSCHRIFT

(11) **EP 3 661 820 B1**
(45) Veröffentlichungstag und Bekanntmachung des Hinweises auf die Patenterteilung: **31.03.2021**
(21) Anmeldenummer: 18750143.2
(22) Anmeldetag: 31.07.2018
(51) Int. Cl.: B60T 11/26

(54) **BREMSFLÜSSIGKEITSBEHÄLTERSYSTEM, DAS DEM BLOCK DES AKTUATORS DER BREMSANLAGE ZUGEORDNET IST**
RESERVOIR SYSTEM ASSOCIATED WITH THE BRAKE ACTUATION BLOCK
SYSTÈME DE RESERVOIR LIQUIDE DE FREIN ASSOCIÉ AU BLOC DE L'ACTIONNEUR

(30) Priorität: 04.08.2017 FR 1757526
(43) Veröffentlichungstag der Anmeldung: 10.06.2020
(73) Patentinhaber: Robert Bosch GmbH, 70442 Stuttgart (DE)
(72) Erfinder: TANDLER, Juergen, 87629 Fuessen (DE); GAFFE, Francois, 44420 La Turballe (FR); SZYMANSKI, Maciej, 54-116 Wroclaw (PL); PFLAUM, Dieter, 87452 Krugzell (DE); LASMANOWICZ, Piotr, 51-361 Wilczyce (PL); WEH, Andreas, 87477 Sulzberg (DE); STEFANIAK, Eligiusz, 55-050 Sobotka (PL); WANG, Xingyuan, 87435 Kempten (DE)
(86) Internationale Anmeldenummer: PCT/EP2018/070690
(87) Internationale Veröffentlichungsnummer: WO 2019/025421

(56) Entgegenhaltungen:
- DE-A1- 19 738 334
- JP-A- H09 286 318
- KR-A- 20030 087 263
- US-A- 5 647 212

## Beschreibung

### Gebiet der Erfindung

Die vorliegende Erfindung betrifft ein Bremsflüssigkeitsbehältersystem zur Befestigung auf der Oberseite des Ventilblocks des Aktuators der Bremsanlage und zur Verbindung mit den Öffnungen des Blocks zur Zuführung und Rückführung von Bremsflüssigkeit durch die Öffnungen der Unterseite des Behälters, wobei der Block eine Rückseite, eine leitende Seite und eine Vorderseite in Längseinbaurichtung des Blocks in den Raum des Motors des Fahrzeugs aufweist.

Mit anderen Worten betrifft die Erfindung eine Gesamtheit, die von einem Bremsflüssigkeitsbehälter und einem Ventilblock gebildet ist, der diesen Behälter aufnimmt, und umfassend Befestigungsmittel, die dazu bestimmt sind, mit den Befestigungsmitteln des Behälters zusammenzuwirken.

### Stand der Technik

Ein Bremsflüssigkeitsbehältersystem nach den Merkmalen des Oberbegriffs des Anspruchs 1 ist bereits bekannt aus der US 5,647,212 A.

Weiterhin bekannt sind zahlreiche Ausführungen von Bremsflüssigkeitsbehältern, um sie mit dem Ventilblock, den sie versorgen und/oder mit dem die Bremsflüssigkeit ausgetauscht wird, zu verbinden. Diese bekannten Lösungen bestehen im Allgemeinen darin, eine Schraubverbindung mit Zwischenfügung von Dichtungen auszuführen. Ganz allgemein ist diese Lösung auf Dauer im Rahmen einer Fahrzeugmontagelinie relativ kompliziert im Einsatz.

### Aufgabe der Erfindung

Aufgabe der vorliegenden Erfindung ist es, ein Bremsflüssigkeitsbehältersystem zu entwickeln, das leicht und einfach zu montieren **oder durch einfaches Drehen zu demontieren ist,** das es ermöglicht, rasch die Dichtigkeit zwischen den Öffnungen des Bremsflüssigkeitsbehälters und den Eingängen des Ventilblocks herzustellen und auch die Gefahr einer Beschädigung der Dichtungen zwischen dem Behälter und der Oberseite des Blocks zu verringern.

### Offenbarung und Vorteile der Erfindung

Zu diesem Zweck betrifft die Erfindung ein Bremsflüssigkeitsbehältersystem vom oben definierten Typ, dadurch gekennzeichnet, dass
A. die Oberseite des Behälters an seiner hinteren Ecke eine quer verlaufende Gelenkachse umfasst und im Längsabstand zur Achse gleich dem Abstand der Vorder- und Rückseiten des Blocks die Unterseite eine Befestigungslasche trägt,
B. der Ventilblock an seiner Rückwand einen Querträger zur Befestigung der Achse des Behälters und auf der Vorderseite einen Befestigungspunkt für die Befestigungslasche des Behälters umfasst.

Dieses Behältersystem hat den Vorteil, dass es sehr einfach in der Herstellung ist, sowohl für den eigentlichen Behälter als auch für die komplementären Montagemittel, die vom Ventilblock getragen werden.

Diese Montagemittel greifen nicht in das Innere des Ventilblocks ein, da sie einerseits an der Rückseite des Blocks befestigt sind und andererseits von einem Befestigungspunkt auf der Vorderseite des Blocks gebildet sind.

Die Montage dieses Behälters ist besonders einfach, da sie darin besteht, die Achse in den Querträger zur Befestigung auf der Rückseite des Ventilblocks einzusetzen, und dann den Behälter zu schwenken, um ihn auf der Oberseite des Ventilblocks zur Auflage zu bringen, oder genauer, um die Ausgangsöffnungen des Behälters mit den Öffnungen der Oberseite des Blocks in Kontakt zu bringen, wobei die Dichtungen entweder integriert sind oder vorher auf oder in den Öffnungen der zwei zu verbindenden Elemente angeordnet werden.

Das einfache Schwenken des Behälters in Bezug zur Oberseite des Blocks führt zu einer genauen Positionierung des Behälters auf dem Block ohne Translationsbewegung, die die Dichtungen zwischen den Öffnungen verschieben könnte.

Sodann, wenn der Behälter abgesenkt und aufgelegt ist, reicht es aus, den vorderen Bereich des Behälters am Ventilblock zu befestigen.

Der Befestigungspunkt ist vorzugsweise ein Gewinde in der Vorderseite des Blocks, und die Befestigungslasche umfasst eine Bohrung, die eine Schraube aufnimmt, die durch die Befestigungslasche des Behälters hindurchgeht, um sich in den Block zu schrauben.

Durch diese einfache Schwenk- und Schraubbewegung wird der Behälter am Block befestigt.

Nach einem vorteilhaften Merkmal wird die Querachse des Behälters von Laschen getragen, die mit der Rückseite des Behälters verbunden sind, und über die die Achse auf beiden Seiten hinausragt.

Diese Laschen sind auf der gesamten Höhe mit dem unteren Teil des Behälters verbunden und erstrecken sich über eine Breite im Wesentlichen entsprechend der Breite des Blocks, so dass der Behälter nicht entlang einer Linie gehalten wird, die im Wesentlichen jener der Achse entsprechen würde, sondern auf einer Fläche, wodurch die Auflagekräfte des Behälters auf dem Block ohne Gefahr einer Verformung des Behälters und somit eines Nachlassens der Auflagekräfte, die die Dichtigkeit der Verbindung zwischen dem Behälter und dem Ventilblock gewährleisten, gut verteilt werden.

Nach einem weiteren Merkmal hat der Querbefestigungsträger, der von der Rückseite des Blocks getragen wird, die Form einer Gabel, deren zwei Schenkel, die um den Abstand des die Achse tragenden Trägers auf dem Behälter beabstandet sind, mit Lagern in Form von nach vorne offenen und oben geschlossenen Haken enden, um die zwei Enden der von dem Behälter getragenen Achse aufzunehmen.

Diese Querträgerform gewährleistet einerseits eine ausgezeichnete Positionierung der Achse und den Halt dieser Positionierung, da er sich über eine große Breite erstreckt.

Nach einem weiteren Merkmal wird die Querachse des Behälters von zwei Laschen getragen, die mit der Rückseite des Behälters verbunden und an den zwei Enden der Querachse des Behälters befestigt sind, und hat der von dem Block getragene Querbefestigungsträger die Form einer Gabel, die mit einem Schenkel versehen ist, dessen Ende ein hakenförmiges Lager bildet, das nach vorne hin offen und oben geschlossen ist, um den Teil der Querachse zwischen den zwei mit der Rückseite des Behälters verbundenen Laschen aufzunehmen.

Diese Ausführungsvariante des Drehpunktes ist genauso einfach wie die vorhergehende in ihrer Verwirklichung und ihrem Einsatz.

Die so gebildete Gesamtheit von einerseits der Querachse des Behälters, die von den Laschen getragen wird, die mit der Gesamtheit der Rückseite des Behälters und dem Querbefestigungsträger in Gabelform verbunden sind, verwirklicht einen Drehpunkt sowie eine Auflage, die die Auflagekräfte des Behälters auf der Oberseite des Blocks aufnimmt.

Da die Haken auf der Oberseite geschlossen sind, ermöglichen sie es, die Reaktionskräfte in aufsteigende Richtung gut aufzunehmen.

So wird der Behälter nicht nur quer von dem Drehpunkt sondern auch vorne von dem Befestigungspunkt gehalten, der von der Lasche mit der Schraube und dem Gewinde gebildet ist. Die Gesamtheit des Behälters ist somit perfekt stabilisiert, obwohl es sich um einfache Verbindungsmittel handelt, die den Behälter mit dem Block verbinden.

### Zeichnungen

Die vorliegende Erfindung ist nachstehend detaillierter mit Hilfe eines Ausführungsbeispiels eines Bremsflüssigkeitsbehältersystems beschrieben, das in den beiliegenden Zeichnungen dargestellt ist, wobei:
- Figur 1 eine Seitenansicht des Behältersystems ist, das auf dem Ventilblock des Aktuators der Bremsanlage installiert ist,
- Figur 2 eine vordere Perspektivansicht des Behältersystems ist,
- Figur 3 eine hintere Perspektivansicht des Behältersystems ist,
- Figur 4 eine getrennte Ansicht des Behälters und des Ventilblocks ist, und
- Figur 5 eine isometrische Rückansicht einer weiteren Ausführungsart des erfindungsgemäßen Behältersystems ist,

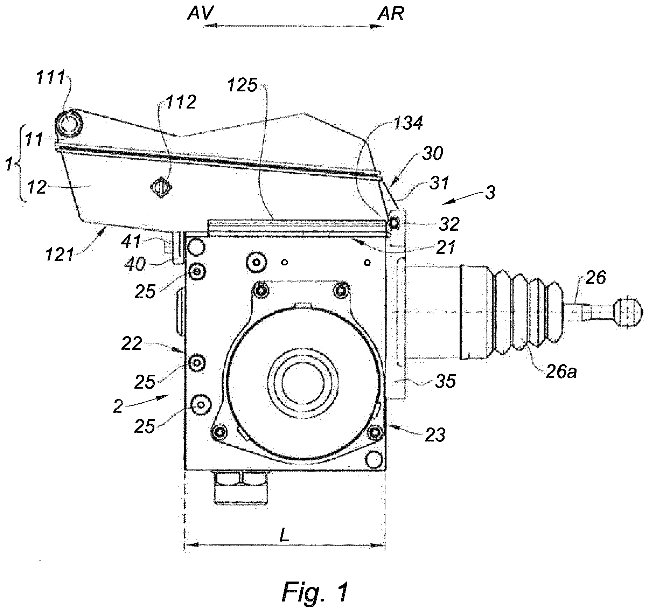

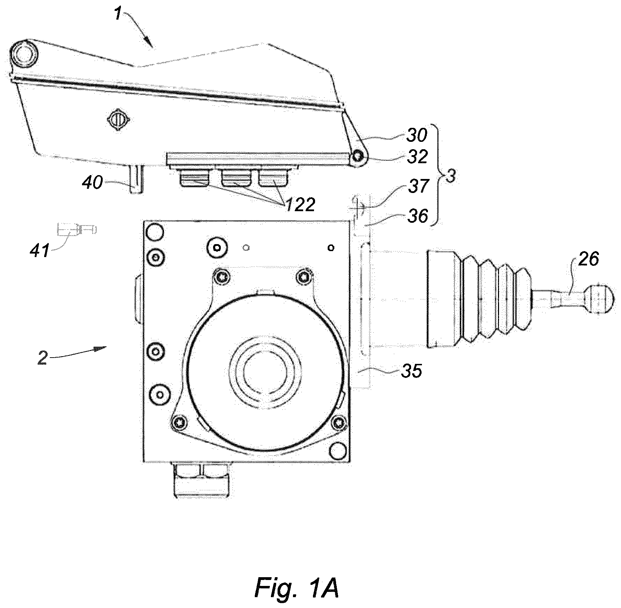

- die Figuren 1A, 2A, 3A demontierte Ansichten des Behälters und des Ventilblocks entsprechend den Figuren 1, 2 bzw. 3 sind.

### Beschreibung einer Ausführungsart der Erfindung

Nach den Figuren 1, 2, 3 betrifft die Erfindung ein Bremsflüssigkeitsbehältersystem 1, das abnehmbar auf der Oberseite des Ventilblocks 2 des Aktuators der Bremsanlage, mit der es Bremsflüssigkeit austauscht, befestigt ist.

Der Aktuator, nicht im Detail dargestellt, hat die Form eines parallelflachen Blocks mit einer Oberseite 21 und zwei um den Abstand L entfernten Seitenflächen 22, 23.

Für den Bedarf der Beschreibung ist der Block 2 in die Längsrichtung des Motorraums des Fahrzeugs, in das er installiert ist, ausgerichtet dargestellt. Diese Ausrichtung entspricht der üblichen Ausrichtung der Installation des Blocks 2 vor der Wand, die den Motorraum und den Fahrgastraum trennt, in der Nähe der Anordnung des Bremspedals, das seinerseits fahrgastraumseitig ist. Diese Ausrichtung ist in Figur 1 durch den Doppelpfeil AV, AR, um die Vorderseite AV und die Rückseite AR zu bezeichnen, dargestellt.

Die Figuren zeigen Details des Blocks 2, wie seinen Aktuator 24 und den Ausgang 25 zu dem oder den Bremskreisen.

Der Block 2 ist mit der Steuerstange 26 versehen, die von einem Gebläse 261 umgeben ist. Die Steuerstange 26 ist durch einen nicht dargestellten Schieber mit dem Bremspedal verbunden, um die Bremsbefehle an den Block 2 zu übertragen.

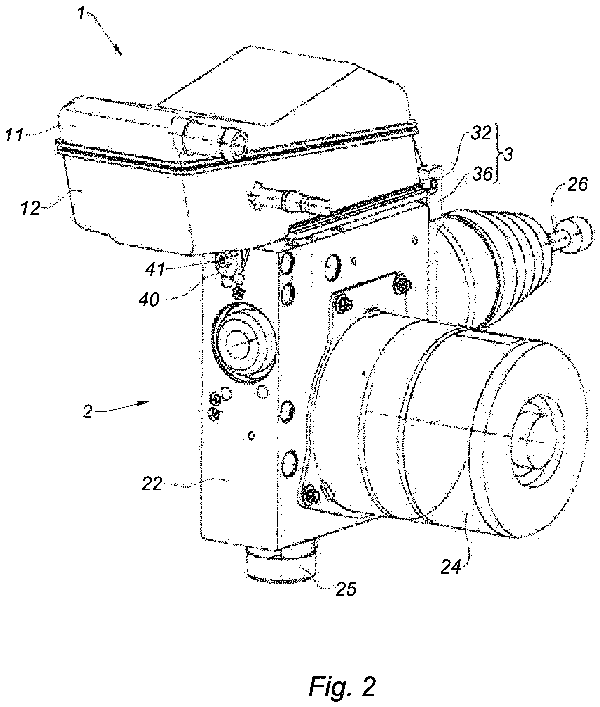

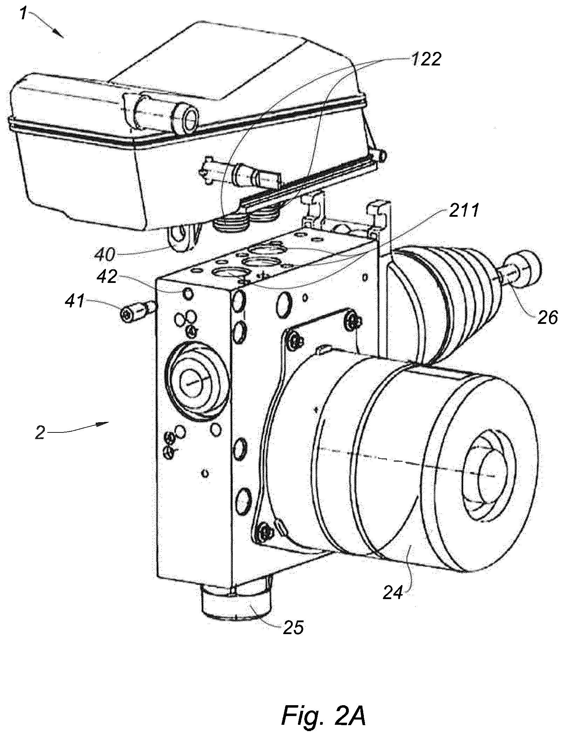

In diesem Zusammenhang hat der Block 2 eine Vorderseite 22 und eine Rückseite 23 und zwischen diesen eine Oberseite 21, die mit zwei oder drei Öffnungen 211 versehen ist, um mit ebenso vielen Öffnungen zusammenzuwirken, die in dem Boden des Behälters 1 vorgesehen sind, um den Ventilblock 2 mit Bremsflüssigkeit zu versorgen (Figur 2A).

Der Behälter 1 ist ein Formteil aus Kunststoffguss, im Allgemeinen gebildet von zwei zusammengefügten Teilen 11, 12, einem oberen Teil 11 und einem unteren Teil 12. Der Behälter 1 ist im oberen Teil mit einem Füllstutzen 111 und einer Kupplungsleitung 112 versehen.

Der Unterteil 121 des Behälters 1 umfasst Öffnungen 122, um mit jenen 211 des Oberteils 21 des Blocks 2 zusammenzuwirken (Figur 1A). Der Behälter 1 ist mit dem Block 2 durch einen Drehpunkt 3 verbunden, der von einem mit dem Behälter 1 verbundenen Teil und einem mit dem Block 2 verbundenen Teil gebildet ist und sich über die gesamte Breite des Blocks 2 erstreckt, um den Halt in Querrichtung des Behälters 1 auf dem Block 2 zu gewährleisten.

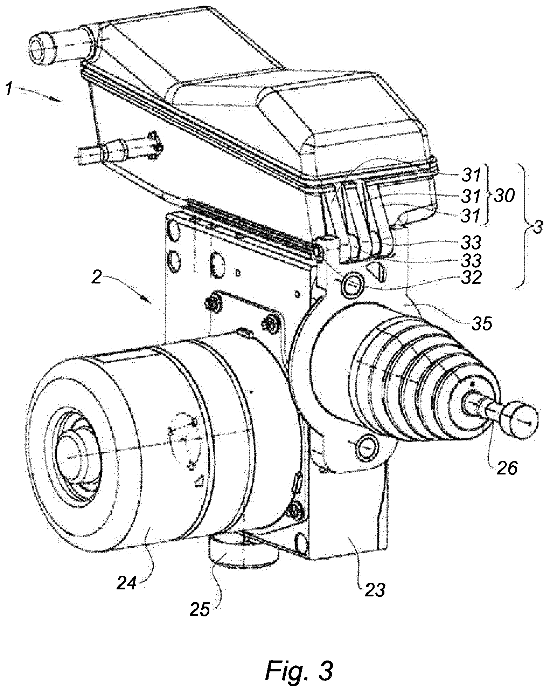

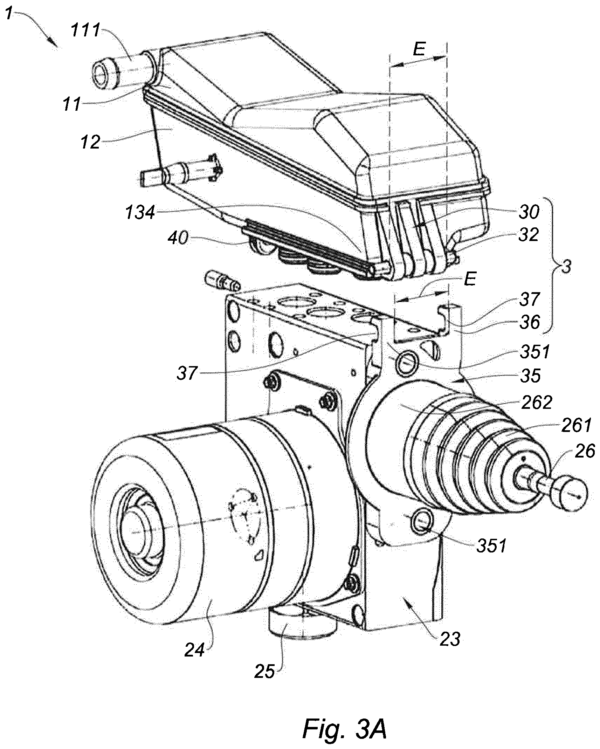

Die Rückseite 123 des Behälters (Figur 3) ist mit einem Achsträger 30 der Breite E versehen, der von Laschen 31 gebildet ist, die die Achse 32 tragen und aus beiden Seiten der Laschen 31 mit einer Querausrichtung hinausragen, d.h. senkrecht zur Ebene der Figur 1. Wie dies besser in Figur 3 zu sehen ist, ragen die Laschen 31 von dreieckiger Form auf der Rückseite 123 des Behälters nach oben. Diese Laschen 31, die wie Stützpfeiler die gesamte Höhe des unteren Teils 12 einnehmen, sind hier in der Anzahl von drei vorhanden, zueinander beabstandet und im Bereich des Durchgangs der Achse 32 durch Zwischenelemente 33 getrennt, um diese Struktur leichter zu machen und gleichzeitig eine gute Querstabilität zu bewahren, die für den Halt des Behälters 1 in der installierten Position notwendig ist.

Unter diesen Bedingungen nimmt das Gelenk des Behälters 1 mit seiner Achse 32 eine Breite praktisch gleich jener des Blocks 2 ein.

Die zwei Ränder der Unterseite 121 des Behälters 1 sind mit Greifstangen 125 für die Montagekette versehen.

Die Achse 32 befindet sich über der hinteren Ecke 124 des Behälters 1.

In Übereinstimmung mit den Schwenk- und Blockiermitteln des Behälters 1 ist die Rückseite 23 des Blocks 2 mit einem Querträger 35 in Form einer Gabel versehen, bei der der Abstand der gegenüberliegenden Schenkel 36 im Wesentlichen gleich dem Abstand E des Trägers 30 ist, der von den Laschen 31, die die Achse 32 tragen, gebildet ist (Figur 3A).

Der Träger 35 hat einen Körper in Ringform, der ein röhrenförmiges Element 262 umgibt, das von der Steuerstange 26 und den mit dieser verbundenen Komponenten innerhalb des Blocks 2 durchquert wird, dessen Verlängerung dieses Element bildet.

Der Träger 35 ist an der Rückseite 23 des Blocks 2 durch Schrauben 351 befestigt (Figur 3A).

Die zwei Schenkel 36 enden mit einem Lager 37 in Form eines nach vorne offenen Hakens und mit einem Querschnitt, der dem Durchmesser der Achse 32 des Behälters 1 entspricht. Die Haken der Lager 37 sind oben geschlossen, um die Achse 32 in Vertikalrichtung zu halten, die jene der Reaktion des Behälters ist, der auf der Oberseite 21 des Blocks 2 installiert und aufliegend ist.

Vorne umfasst die Unterseite 121 des Behälters 1 im Abstand L entsprechend der Entfernung der Vorder-/Rückseiten 22, 23 des Blocks 2 eine Befestigungslasche 40, um eine Schraube 41 aufzunehmen, die in ein Gewinde in einer homologen Position zu jener der Vorderseite 22 des Blocks 2 geschraubt ist, wodurch ein auflagepunkt gebildet wird.

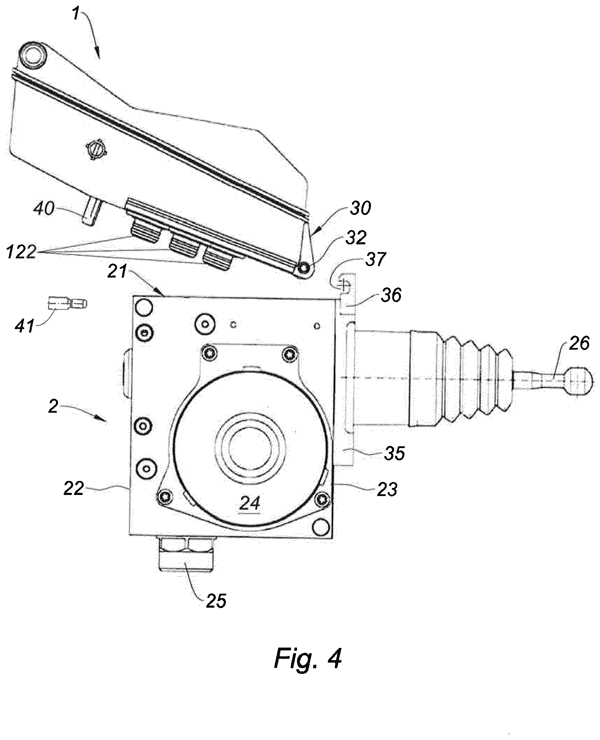

Die Anordnung (oder die umgekehrte Bewegung) des Behälters 1 auf dem Block 2 erfolgt, wie in Figur 4 dargestellt, durch Einsetzen des Achsträgers 32 zwischen die Schenkel 36 des Querträgers 35 und Anordnung der zwei Enden der Achse 32 in den Lagern 37 des Querträgers 35 und sodann Blockieren durch die an den Block 2 geschraubte Lasche 40.

Die Abmessungen und die Spiele zwischen den Befestigungsmitteln des Behälters 1 und jenen des Blocks 2 sind derart, dass die absteigende Schwenkbewegung des Behälters 1 zwischen den Lagern 37 die Unterseite 121 des Behälters 1 mit ihren Öffnungen in Form von Ansätzen 122 gegen die Öffnungen 211 der Oberseite 21 des Blocks 2 presst, die mit Dichtungsmitteln versehen sind, um die Dichtigkeit dieser Verbindung herzustellen, wobei sie seitlich durch die Ansätze des Behälters und die Dichtungsmittel in den Öffnungen des Blocks 2 gehalten wird.

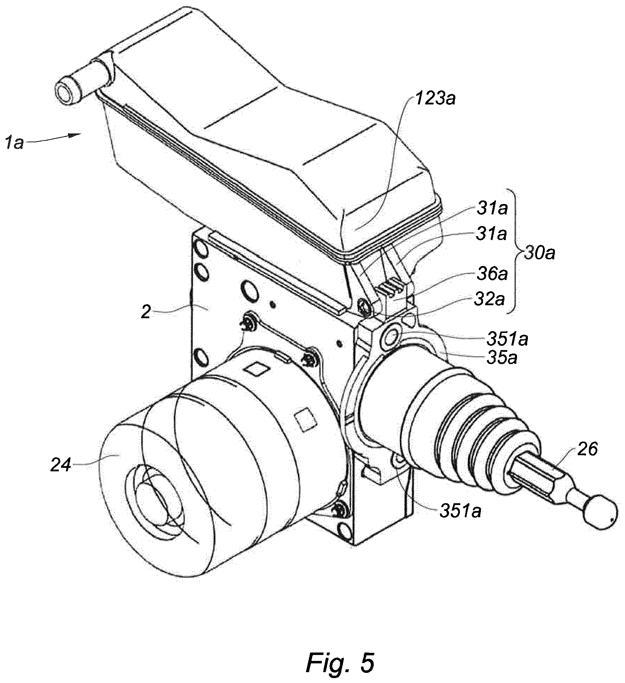

Figur 5 zeigt eine Variante 3a des vorher beschriebenen Drehpunktes 3 und unterscheidet sich nur durch die relative Anordnung des Querträgers 35 und des Achsträgers 30.

Bei dieser Variante eines Drehpunktes 3a wird die Achse 32a an ihren zwei Enden von Laschen 31a getragen, die mit dem Behälter 1a verbunden sind und eine ähnliche Form wie jene der vorher beschriebenen Laschen 31 haben. Die Traggabel 35a hat nur einen Schenkel 36a von gleicher Breite wie der Restzwischenraum zwischen den Laschen 31a. Die anderen Elemente dieser Variante von Behälter 1a und Träger 35a sind mit den oben beschriebenen identisch und tragen dieselben Bezugszeichen, ergänzt durch das Suffix a.

Diese Variante ist genauso einfach zu verwirklichen und zu installieren, wie die oben beschriebene Ausführungsart.

### NOMENKLATUR

- 1: Behälter
11 Oberteil des Behälters
111 Füllstutzen
112 Kupplungsleitung
12 Unterteil des Behälters
121 Unterseite
122 Öffnung
123 Rückseite
124 hintere Ecke
125 Greifstange auf der Montagelinie
2 Ventilblock
21 Oberseite
211 Öffnung
22 Vorderseite
23 Rückseite
24 Aktuator
25 Ausgang zu Bremsanlage
26 Steuerstange
261 Gebläse
262 röhrenförmiges Element
3, 3a Drehpunkt
30, 30a Achsträger
31, 31a Laschen
32, 32a Achse
33 Zwischenelemente
35, 35a Querträger in Gabelform
351, 351a Schraube
36, 36a Schenkel
37 Lager
40 Befestigungslasche
41 Schraube
42 Gewinde

## Patentansprüche

1. Bremsflüssigkeitsbehältersystem mit einem Ventilblock (2) und einem Behälter (1) zur Befestigung auf der Oberseite des Ventilblocks (2) des Aktuators der Bremsanlage und zur Verbindung mit den Öffnungen des Blocks (2) zur Zuführung und Rückführung von Bremsflüssigkeit durch die Öffnungen der Unterseite des Behälters (1), wobei der Block (2) eine Rückseite (23), eine leitende Seite und eine Vorderseite (22) in Längseinbaurichtung des Blocks (2) in den Raum des Motors des Fahrzeugs aufweist, **dadurch gekennzeichnet, dass**
A. die Oberseite (121) des Behälters (1) an seiner hinteren Ecke (124) eine quer verlaufende Gelenkachse (32) umfasst und im Längsabstand zur Achse (32) gleich dem Abstand (L) der Vorder- (22) und Rückseiten (23) des Blocks (2) die Unterseite (121) eine Befestigungslasche (40) trägt,
B. der Ventilblock (2) an seiner Rückwand (23) einen Querträger (35) zur Befestigung der Achse (31) des Behälters (1) und auf der Vorderseite (22) einen Befestigungspunkt für die Befestigungslasche (40) des Behälters (1) umfasst.

2. Behältersystem nach Anspruch 1, **dadurch gekennzeichnet, dass** der Befestigungspunkt ein Gewinde ist, und die Befestigungslasche (40) eine Bohrung umfasst, die eine Schraube (41) aufnimmt, die durch die Befestigungslasche (40) des Behälters (1) hindurchgeht.

3. Behältersystem nach Anspruch 1, **dadurch gekennzeichnet, dass** die Querachse (32) des Behälters (1) von Laschen (31) getragen wird, die mit der Rückseite (123) des Behälters (1) verbunden sind, und von denen die Achse (32) auf beiden Seiten herausragt.

4. Behältersystem nach Anspruch 1 und Anspruch 3, **dadurch gekennzeichnet, dass** der Querbefestigungsträger (35) die Form einer Gabel hat, deren zwei Schenkel (36), die um den Abstand (E) des die Achse (32) tragenden Trägers (30) beabstandet sind, mit Lagern (37) in Form von nach vorne offenen und auf der Oberseite geschlossenen Haken enden, um die zwei Enden der Achse (32) aufzunehmen.

5. Behältersystem nach Anspruch 1, **dadurch gekennzeichnet, dass** die Querachse (32a) des Drehpunktes (3a) des Behälters (1a) von Laschen (31a) getragen wird, die mit der Rückseite (123a) des Behälters verbunden sind, wobei die Laschen in der Anzahl von zwei die Achse (32a) mit ihren zwei Enden tragen.

6. Behältersystem nach Anspruch 1 und Anspruch 5, **dadurch gekennzeichnet, dass** der Drehpunkt (3a) einen Querbefestigungsträger (35a) in Form einer Gabel umfasst, die einen Schenkel (36a) von im Wesentlichen gleicher Breite wie der verbleibende Zwischenraum zwischen den zwei die Querachse (32a) tragenden Laschen (31a) hat, wobei der Schenkel (36a) mit einem Lager in Form eines nach vorne offenen und auf der Oberseite geschlossenen Hakens zur Aufnahme der Achse (32a) endet.

## Claims

1. Brake fluid reservoir system having a valve block (2) and a reservoir (1) for fastening to the upper side of the valve block (2) of the actuator of the brake system and for connecting to the openings of the block (2) in order to supply and return brake fluid through the openings of the lower side of the reservoir (1), wherein the block (2), in the longitudinal installation direction of the block (2) in the engine bay of the vehicle, has a rear side (23), a conducting side, and a front side (22), **characterized in that**
A. the upper side (121) of the container (1), at the rear corner (124) thereof, comprises a transversely running articulated axle (32), and the lower side (121), at a longitudinal spacing from the axle (32) that is equal to the spacing (L) of the front (22) and rear sides (23) of the block (2), supports a fastening tab (40);
B. the valve block (2), on the rear wall (23) thereof, comprises a cross member (35) for fastening the axle (31) of the reservoir (1), and, on the front side (22), comprises a fastening point for the fastening tab (40) of the reservoir (1) .

2. Reservoir system according to Claim 1, **characterized in that** the fastening point is a thread, and the fastening tab (40) comprises a bore which receives a screw (41) that penetrates the fastening tab (40) of the reservoir (1).

3. Reservoir system according to Claim 1, **characterized in that** the transverse axle (32) of the reservoir (1) is supported by lugs (31) which are connected to the rear side (123) of the reservoir (1) and from which the axle (32) protrudes on both sides.

4. Reservoir system according to Claim 1 and Claim 3, **characterized in that** the fastening cross member (35) has the shape of a fork, the two legs (36) thereof, that are spaced apart by the spacing (E) of the support (30) that supports the axle (32), terminating by way of bearings (37) in the form of hooks which, for receiving the two ends of the axle (32), are open towards the front and closed on the upper side.

5. Reservoir system according to Claim 1, **characterized in that** the transverse axle (32a) of the rotation point (3a) of the container (1a) is supported by tabs (31a) which are connected to the rear side (123a) of the container, wherein the tabs in a quantity of two support the axle (32a) by way of the two ends thereof.

6. Reservoir system according to Claim 1 and Claim 5, **characterized in that** the rotation point (3a) comprises a fastening cross member (35a) in the form a fork which has a leg (36a) of substantially identical width as the remaining intermediate space between the two tabs (31a) that support the transverse axle (32a), wherein the leg (36a) terminates by way of a bearing in the form of a hook which, for receiving the axle (32a), is open towards the front and closed on the upper side.

## Revendications

1. Système de réservoir de liquide de frein comprenant un bloc soupape (2) et un réservoir (1) pour la fixation sur le côté supérieur du bloc soupape (2) de l'actionneur de l'installation de freinage et pour la connexion aux ouvertures du bloc (2) pour acheminer et récupérer du liquide de frein par les ouvertures du côté inférieur du réservoir (1), le bloc (2) présentant un côté arrière (23), un côté directeur et un côté avant (22) dans la direction d'installation longitudinale du bloc (2) dans le compartiment moteur du véhicule, **caractérisé en ce que** :
A. le côté supérieur (121) du réservoir (1), au niveau de son coin arrière (124), comprend un axe d'articulation (32) s'étendant transversalement, et le côté inférieur (121), à une distance longitudinale de l'axe (32) égale à l'espacement (L) des côtés avant (22) et arrière (23) du bloc (2), porte une patte de fixation (40),
B. le bloc soupape (2), au niveau de sa paroi arrière (23), comprend une traverse (35) pour la fixation de l'axe (31) du réservoir (1), et sur le côté avant (22), comprend un point de fixation pour la patte de fixation (40) du réservoir (1).

2. Système de réservoir selon la revendication 1, **caractérisé en ce que** le point de fixation est un filetage et la patte de fixation (40) comprend un alésage qui reçoit une vis (41) qui traverse la patte de fixation (40) du réservoir (1).

3. Système de réservoir selon la revendication 1, **caractérisé en ce que** l'axe transversal (32) du réservoir (1) est porté par des pattes (31) qui sont connectées au côté arrière (123) du réservoir (1) et depuis lesquelles l'axe (32) dépasse des deux côtés.

4. Système de réservoir selon la revendication 1 et la revendication 3, **caractérisé en ce que** le support de fixation transversal (35) présente la forme d'une fourche dont les deux branches (36), qui sont espacées de la distance (E) du support (30) portant l'axe (32), se terminent par des paliers (37) en forme de crochet ouvert vers l'avant et fermé sur le côté supérieur, afin de recevoir les deux extrémités de l'axe (32).

5. Système de réservoir selon la revendication 1, **caractérisé en ce que** l'axe transversal (32a) du pivot (3a) du réservoir (1a) est porté par des pattes (31a) qui sont connectées au côté arrière (123a) du réservoir, les pattes au nombre de deux portant l'axe (32a) avec leurs deux extrémités.

6. Système de réservoir selon la revendication 1 et la revendication 5, **caractérisé en ce que** le pivot (3a) comprend un support de fixation transversal (35a) en forme de fourche qui présente une branche (36a) essentiellement de même largeur que le reste de l'espace intermédiaire entre les deux pattes (31a) portant l'axe transversal (32a), la branche (36a) se terminant avec un palier en forme de crochet ouvert vers l'avant et fermé sur le côté supérieur pour recevoir l'axe (32a).
